# EUROPEAN PATENT SPECIFICATION

(11) **EP 2 504 719 B1**
(45) Date of publication and mention of the grant of the patent: **21.02.2018**
(21) Application number: 10793063.8
(22) Date of filing: 08.11.2010
(51) Int. Cl.: G01S 13/93, G08G 3/02

(54) **A METHOD AND SYSTEM OF NAVIGATIONAL DECISION SUPPORT IN THE PROCESS OF SAFE VESSEL NAVIGATION**
VERFAHREN UND SYSTEM ZUR UNTERSTÜTZUNG VON NAVIGATIONSENTSCHEIDUNG IN DER SICHEREN SCHIFSSNAVIGATION
PROCÉDÉ ET SYSTÈME DE SUPPORT DE DÉCISION DE NAVIGATION DANS LE PROCESSUS DE NAVIGATION MARITIME SÛRE

(30) Priority: 26.11.2009 PL 38963809
(43) Date of publication of application: 03.10.2012
(73) Proprietor: Akademia Morska W Szczecinie, 70-500 Szczecin (PL)
(72) Inventor: PIETRZYKOWSKI, Zbigniew, PL-70-443 Szczecin (PL); WOLEJSZA, Piotr, PL-71-621 Szczecin (PL); MAGAJ, Janusz, PL-72-005 Przeclaw (PL); BORKOWSKI, Piotr, PL-71-246 Szczecin (PL); CHOMSKI, Jaroslaw, PL-72-002 Wawelnica (PL); URIASZ, Janusz, PL-71-706 Szczecin (PL); DZIEDZIC, Tadeusz, PL-71-499 Szczecin (PL); MAKA, Marcin, PL-71-113 Szczecin (PL); KAZIMIERSKI, Witold, PL-73-110 Stargard Szczecinski (PL); SZEWCZUK, Tomasz, PL-72-005 Przeclaw (PL); WIELGOSZ, Miroslaw, PL-71-804 Szczecin (PL)
(74) Representative: Kachnic, Tadeusz
(86) International application number: PCT/PL2010/000112
(87) International publication number: WO 2011/065848

(56) References cited:
- WO-A1-2008/009269
- US-A- 4 313 115
- US-A1- 2006 290 562

## Description

The subject of this invention is a method and system which substantially support navigational decisions made in the process of safe navigation of vessels, a sea-going vessel in particular.

There are known methods which support the process of safe navigation of vessels using information from navigational systems and devices such as radar/ARPA (*Automatic Radar Plotting Aid*), GNSS, AIS, and ECDIS. The ARPA system allows to simultaneously track a number of vessels, calculate parameters of their movement and avoid a possible collision. The system uses a radar as a source of information. Depending on the adopted solution and settings, the system may present data on a radar screen in the alphanumeric or graphic form. ARPA features a trial manoeuvre function - manoeuvre simulation, enabling the determination of encounter parameters for own ship and another ship (target), closest point of approach, time to closest point of approach for a preset manoeuvre of own ship - rudder manoeuvre, engine manoeuvre. The Global Navigational Satellite System (GNSS) enables the determination of a vessel position in real time. The Automatic Identification System (AIS) implements automatic ship-ship and ship-shore data exchange, useful in target identification and collision avoidance. ECDIS is a system that, if coupled with appropriate redundant devices may be recognized as an equivalent of updated navigational charts. The system enables a display of selected items of information from the internal (built-in) electronic navigational chart (ENC) and positional information provided by navigational devices. From the viewpoint of navigational safety, ECDIS solves an important problem of displaying on one screen: information on a possible collision, presentation of surface vessels based on radar or ARPA data, positional information from, e.g., GPS/DGPS receiver, bathymetric data included on the chart.

From the Polish patent description PL 382614 we know of a pilot navigation system for pilotage assistance in restricted waters and a method of navigational information display. The said system is composed of a data collection module, prediction module and navigational information display module with dedicated algorithms transforming a geographical position into a form readable to a pilot, which converts the antenna point into an area representing ship's waterplane and displays data as fairway coordinates, in which the ship's waterplane is oriented to the nearest straight segment of the waterway and data displayed in relation to the shore, in which ship's waterplane is oriented relative to a selected line of a quay/pier.

From the Chinese patent description CN 201063059 we know of a model of intelligent ship collision avoidance system. The said system is capable of integrating dynamic information from AIS, GPS and echosounder with static data from an electronic navigational chart and provides a navigator with information that allows to avoid a collision with fixed or mobile objects. Collision situations are indicated by acoustic and light signals and graphic symbols. The system consists of a main module - central computer, data collection module, data processing module and user interface.

From the American patent description US 2006/0290562 we know of a maritime contact management system integrated with a ship's navigational radar and a GPS receiver, which accurately and dynamically calculates own ship course and speed, and, based on collected data calculates and displays courses, speeds, positions and approach parameters of other ships (contacts). The said system calculates own ship required courses and speeds to safely pass another ship, as well as time to arrive at the user-selected points.

From the patent description WO 2004/053814 we know of an adaptive collision avoidance advisory system. The said system for two or more vessels includes a module for the determination of dangerous areas of future positions of each ship involved, a module of collision detection, and a module of collision resolution able to determine courses for vessels remaining on collision courses.

From the British patent description GB 2441802A we know of an integrated marine safety system. The said system consists of three closely co-acting modules/subsystems. One (a sonar) is responsible for gathering information on underwater objects. Another (radar) is responsible for surface vessels, and the third through satellite communications gathers information from external sources of data, e.g. the Internet. Data put out by the three modules are integrated and displayed on one screen in the 3D format. The system also allows to exchange information with other vessels which carry the same type of software.

From the patent description WO 2008/009269 we know a method for a vehicle for determining areas which are at risk of collision with a moving target. The method can be applied for different types of vehicles especially vessels an airplanes. Areas which are at risk of collision with a moving target are bounded by the straight lines which continue the movement vector of the target, the parallel lines which are displaced by a predetermined value with respect to the movement vector of the target and of the straight lines which continue in each case between the outer, course-limiting vectors which start from the vehicle.

The known navigational systems in use and methods of navigational decision support perform information functions and as such are helpful in the process of safe conduct of a vessel. However, none of these known systems provides a navigator with ready solutions of collision situations taking account of all the vessels in the proximity of own ship, where the Collision Regulations apply. Another shortcoming of these systems is that they do not explain the assessment of a navigational situation and proposed manoeuvre parameters.

Besides, the known methods used so far do not display allowable manoeuvres to a navigator, and while working out recommended manoeuvres they do not take into account:
- data that underwent a fusion
- Collision Regulations,
- criteria for the assessment of a navigational situation, such as : fuzzy closest point of approach, ship domain and ship fuzzy domain,
- shore line, available depths and navigational obstructions,
- movement dynamics of own ship.
and size depend on the assumed level of navigational safety.

These known systems and methods also lack a function of explaining the assessment of a navigational situation and of parameters of the proposed manoeuvres.

This invention as defined by the appended claims provides a method of navigational decision support in the process ensuring the safety of navigation, using navigational systems and devices, a computer and information technologies (IT), taking into account the Collision Regulations, subsequent criteria of navigational situation assessment, shore lines, depths, navigational obstructions, dynamics of own ship, as well as the presentation of explanations (for the navigator) of navigational situation assessment together with the parameters of manoeuvres to be performed by own ship facilities.

The navigational decision support method used in the process of safe navigation, as embodied in this invention, features the following operations: in the event of decision making signals identifying own ship and other objects which can be vessels or stationary objects, hereinafter referred to as targets are received from various navigational systems and devices, then these signals undergo fusion in a fusion block (FB) and integration in an integration block (IB), both placed in a data collection module (DCM); followed by the processes of analysis and assessment of a navigational situation by means of a computer, in relation to all targets located at a distance shorter than the closest point of approach limit (CPA Limit) after which the given navigational situation is displayed to the navigator, and when a vessel faces risk of collision allowable and recommended manoeuvres of own ship or targets are generated and presented in a graphical format to the navigator, taking into account at least one safety criterion, such as CPA, as well as algorithmized criteria based on principles of good marine practice or economical criteria, retrieved from a knowledge base module (KBM) and taking into account navigational obstructions, shoreline, depths, and dynamics of own ship movement, while in the situation where the assumed CPA Limit makes it impossible to generate a solution in the form of recommended course and speed, the CPA Limit is reduced and a new solution is sought for its new value and such CPA Limit reductions are made several times until a solution is obtained or the preset minimum CPA Limit is reached, then upon previous approval of the navigator, a chosen allowable and recommended manoeuvre, or a series of subsequent manoeuvres is performed.

After navigational data collection, signals from at least two identical, similar and/or different devices, such as a GPS, gyrocompass, log, AIS, or ARPA, the signals undergo the processes of fusion and integration with an ENC system.

In the generation of allowable and recommended manoeuvres the algorithmized Collision Regulations are applied.

In the process of generation of allowable and recommended manoeuvres, safety criteria such as the closest point of approach CPA, fuzzy closest point of approach (FCPA), are consedered.

In the process of generation of allowable and recommended manoeuvres for the criterion of closest point of approach (CPA), if no solutions are offered in the form of recommended courses and speeds that would allow to pass targets at a preset CPA Limit, the CPA Limit is reduced and solutions are sought, and the reduction of the CPA Limit value is repeated until a preset minimum value is reached.

The current navigational situations are shown to the navigator with explanations, and in compliance with COLREGs, e.g. by descriptive phrases: crossing situation, vessels passed each other, head-on situation.

In the process of generation of allowable and recommended manoeuvres the coastline, available depths and navigational obstructions are taken into account.

In the process of generation of allowable and recommended manoeuvres the dynamics of own ship movement is taken into account.

Explanations of generated navigational situations and recommended manoeuvres are given to the navigator in the form of voice messages.

Allowable and recommended courses of own ship are presented to the navigator graphically in the form of a convex figure, in the form of a circle with marked sectors of allowable and prohibited courses and in the form of a recommended course shown as a line segment or vector.

Allowable and recommended speeds of own ship are presented to the navigator graphically, in the form of a rectangle with marked sectors of allowable and prohibited speeds and a recommended speed in the form of a line segment.

Recommended trajectories of own ship movement, which are determined by a computer fitted with dedicated optimization algorithms are presented to the navigator, together with explanations of manoeuvre manoeuvre parameters, such as: value of the minimum passing distance to a target/targets, deviation, values of course alterations in a collision-avoiding manouevre.

The navigational decision support system (NDSS), adapted to implement the method connected with information source devices, such as AIS, ARPA, GNS, log, gyrocompass, ENC, with a graphical user interface (GUI) and with ship-movement related devices such as autopilot, steering gear, main engine, telegraph and controllable-pitch propeller, is characterized by the fact that the NDSS comprises a management module (MM) connected by an input and/or output signal with a manoeuvre generation module (MGM), event identification module (EIM), data collection module (DCM), module of analysis and assessment of a navigational situation (MOAANS), prediction module (PM), knowledge base module (KBM), module of graphical user interface (GUI), and execution module (EM).

An integration block (IB) of a data collection module (DCM) is coupled through input and output signals with a fusion block (FB) and through output signals with a data archiving block (DAB) and a management module (MM).

The execution module processes received executable decisions on the chosen manoeuvre and its parameters, using dedicated computing algorithms, into control signals, codes these signals and sends them to ship's devices such as autopilot, steering gear, engines, telegraph, controllable pitch propeller.

Fused data are taken into consideration in the determination of recommended manoeuvres. Thanks to the fusion process, reliability of the position obtained and ship movement parameters is considerably higher than if such position comes from one GPS receiver. In the fusion process errors and inaccurate measurements are rejected, which significantly increases the accuracy of calculated encounter parameters. This, in turn, directly translates into greater safety of navigation. Compared to the ARPA system that at present is used on board ships for the determination of encounter parameters and generation of a collision avoiding manoeuvre, the method of this invention has the following advantages:
- it takes into account the Collision Regulations applicable in good and restricted visibility,
- it develops a manoeuvre in relation to other targets, even those located within a radar blind sector,
- an operator receives an immediate message on a manoeuvre started by a target thanks to information on target's rate of turn sent in from AIS,
- it needs just a few seconds to determine encounter parameters, while ARPA, according to IMO standards concerning test situations, takes about one minute of tracking to display a CPA with up to one nautical mile accuracy. After three minutes, maximum error in calculating CPA and TCPA by ARPA may amount to, respectively, 0.5 Nm and 1 minute. The above tolerances are given with a 95% probability,
- it determines ship encounter parameters with higher precision, which is due to two factors:
   1. accounting for ship's size thanks to information on the antenna position, received from AIS,
   2. application of GPS / DGPS for position determination,
- takes into account ship's size while working out a collision avoidance manoeuvre,
- sets new courses and speeds of own ship, such that it can pass other targets at a preset CPA.

The method developed and presented in this invention, when incorporated into the integrated bridge system, significantly enhances the safety of navigation and, if properly used, will allow to avoid many collisions.

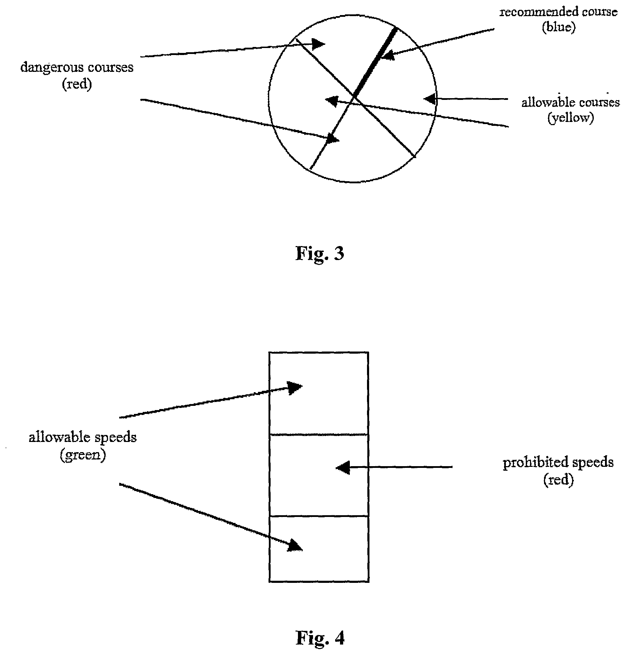

The subject of this invention is visualized in an example situation, illustrated in a number of diagrams, where Fig. 1 shows a simplified schematic diagram of the system of navigation decision support in the process of safe vessel navigation, Fig. 2 depicts a schematic diagram of a navigational decision support system, Fig. 3 shows the method of displaying allowable and recommended courses of own ship, Fig.4 shows the method of presenting allowable and recommended speeds of own ship, Fig. 5 shows graphically the first stage of an encounter situation of own ship with other ships (targets), Fig. 6 shows a subsequent stage in a graphical display of allowable and recommended manoeuvres, Fig. 7 shows another stage of graphical presentation for restricted visibility, Fig, 8 - a case where a preset CPA Calc. has been reduced, Fig. 9 - a case where the preset CPA Calc. = 0.25 Nm, and finally, Fig. 10 shows the fourth stage of graphical presentation with information on close quarters situation.

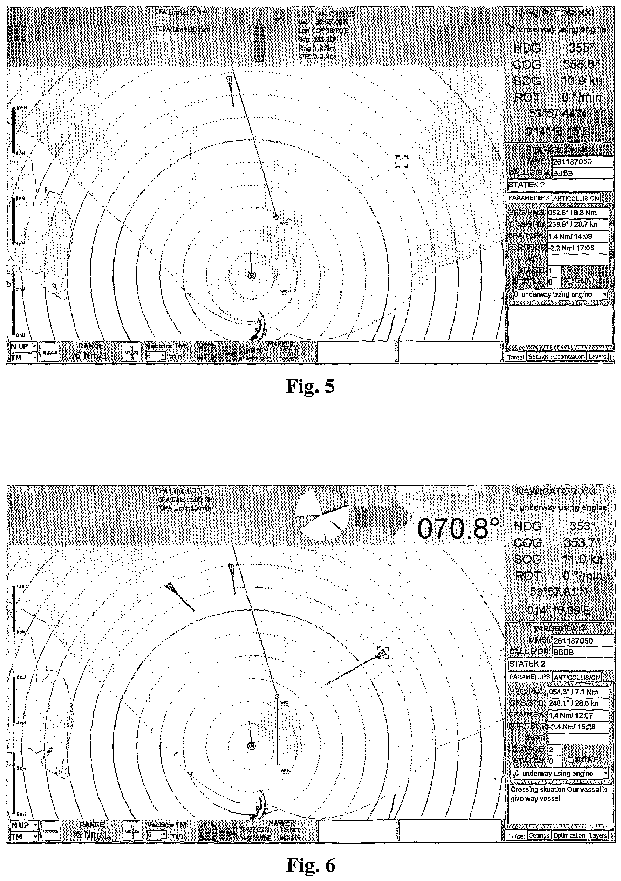

The method and system of navigational decision support, the subject of this invention, are implemented with the use of a computer, to assist a navigator in various navigational situations, e.g. one illustrated in Fig. 5. The system fuses and integrates signals received from shipboard navigational devices and systems: AIS, ARPA, GNSS receivers, speed log, gyrocompass, system of electronic navigational charts (ENC). There are four vessels involved in the situation herein considered. The southernmost vessel is own ship. The displayed range rings (actual

distance between the rings is 1 Nm) and information on the indicated target (*statek* = vessel 2), shown in the bottom right-hand corner of the screen, allow us to state that distances to the targets are longer than 8 Nm. In accordance with the regulations and good marine practices we recommend maintaining the present course and speed of own ship. As the situation develops, in the next phase (Fig. 6) the distance of own ship to vessel 2 is 7.1 Nm (< 8 Nm), therefore, following the regulations and good marine practices this encounter situation is being assessed. The assessment, based on Collision Regulations and displayed in the bottom right-hand screen corner, suggests that our ship should give way. In the analyzed case the CPA is taken into account as a safety criterion. The calculated value of CPA is 1.4 Nm and is greater than the assumed CPA Limit shown at the top of the screen. Therefore, there is no need to perform a preventive manoeuvre in relation to vessel 2. However, such manoeuvre has to be taken to avoid a collision with the vessel ahead of own ship. In this connection allowable and recommended manoeuvres are generated relative to all the other targets that are proceeding at a range shorter than the assumed 8 Nm. The allowable sectors of own ship courses are marked yellow in the circle (top centre). The range of courses, any of which would lead to passing targets at a distance shorter than the assumed one, are marked red. The recommended solution is represented in the circle by a blue line segment and additionally displayed in the digital form (070.8⁰) under NEW COURSE caption. When approved by a navigator, this solution is transmitted to the executive facilities of the autopilot and steering gear.

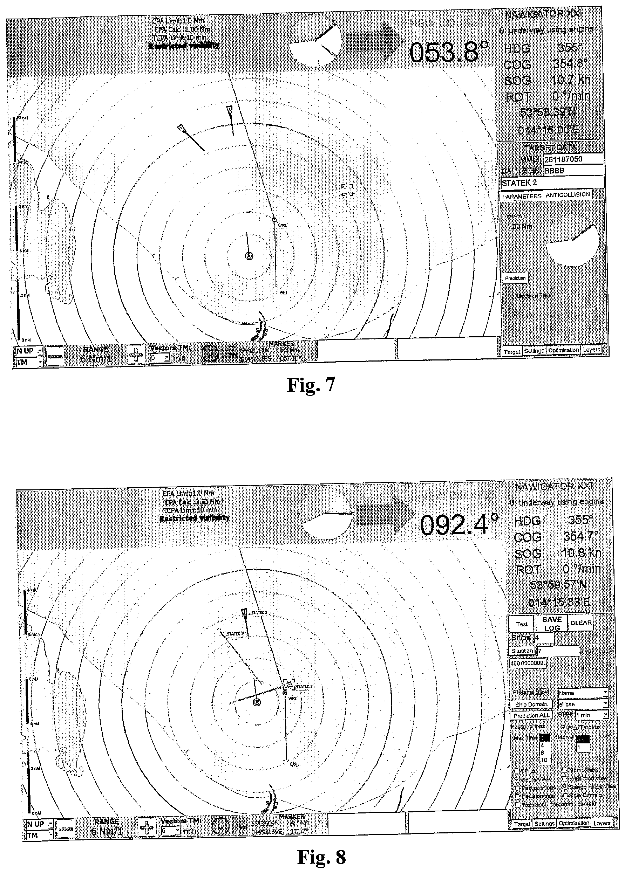

The method of navigational decision support, the subject of this invention, takes into account both good and restricted visibility. The restricted visibility input is entered by a navigator. Fig. 7 presents allowable and recommended manoeuvres in relation to all the tracked targets (top screen) as well as to a selected target only - vessel 2 (right-hand side) where the Collision Regulations for restricted visibility are taken into consideration. Allowable and recommended manoeuvres relative to a target for good visibility conditions are presented in a similar manner.

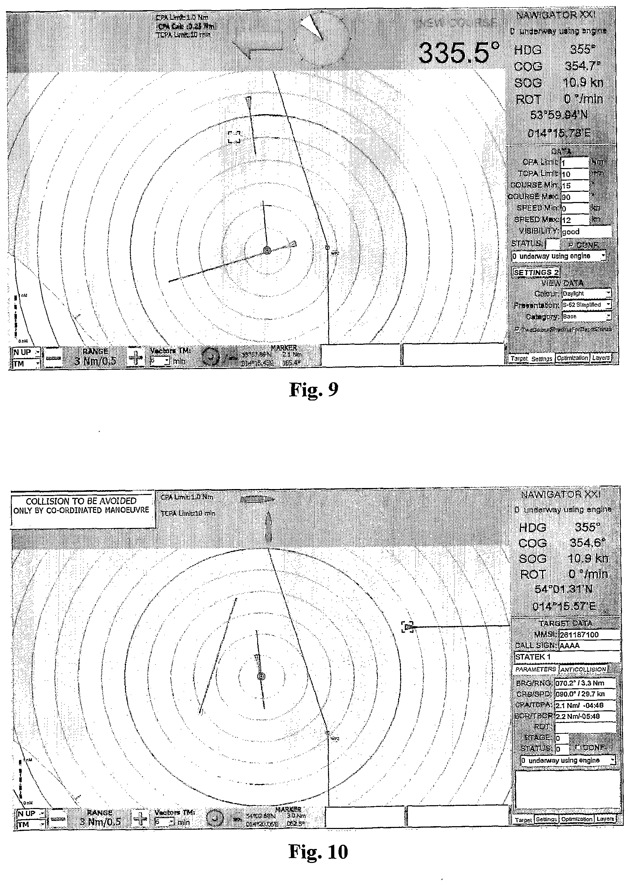

In the third phase of a situation, if no solutions are generated in the form of recommended courses and speeds, such that would allow to pass the targets at a distance not less than the preset CPA Limit, we automatically reduce the CPA Limit value by half, for which solutions are sought. The reduction of CPA Limit value is indicated in the top screen by the notation CPA Calc. The value of CPA Calc may be reduced several times provided that CPA Calc ≥ 0.25 Nm. Examples of such reductions are shown in Figures 8 and 9, the latter referring to good visibility conditions.

In the subsequent fourth phase, if no solutions are generated for CPA Calc = 0.25 Nm, there will be a message displayed in the top left corner of the screen that a collision can only be avoided by coordinated manoeuvres of both vessels concerned, as shown in Figure 10. This and other messages are also presented as voice messages.

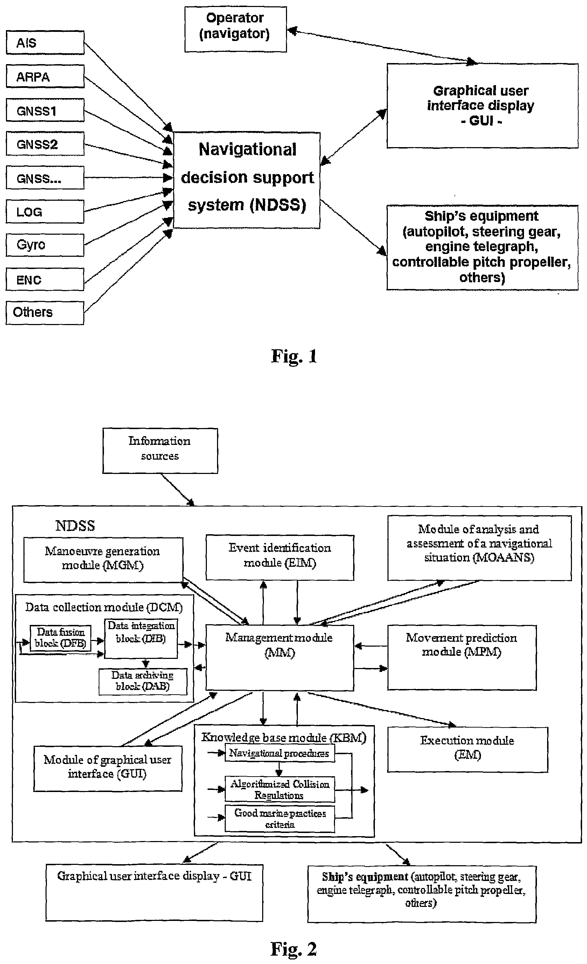

The method is implemented by a navigational decision support system (NDSS) in the process of safe vessel navigation, where the said system processes signals implementing hereinbefore described method of navigational decision support in modules: data collection (DCM), event identification EIM), knowledge base (KBM), analysis and assessment of a navigational situation (MOAANS), manoeuvre generation (MGM), movement prediction (MPM), graphical user interface (GUI), management (MM) and execution (EM) (Fig. 2).

A detailed description of signal paths is given through the specification of tasks, input and output signals of each module of the system.
Data collection module (DCM) is responsible for registration, decoding, fusion using dedicated computing algorithms, and integration of data obtained from external navigational devices and systems. Data fusion is performed when the system registers from two or more sources signals describing the same parameters of targets. The fusion results in an averaged signal accounting for measurement data from redundant sensors. Consequently, the system reliability is enhanced, measurement errors are reduced, continuous system operation is ensured and data reception frequency is higher.

### Input signals of this module are:

- identification numbers, navigational statuses, geographical coordinates, courses, speeds, voyage data and others (e.g. ship type, length, breadth, draught) of targets in an area obtained from AIS and ARPA;
- latitude/longitude, course over ground, true course, rate of turn, course through water, speed through water of own ship, obtained from GNSS receivers, e.g. GPS or DGPS, speed log and gyrocompass;
- user-verified navigational status of targets from the management module;
- static data on own ship (e.g.: name, identification number, navigational status, length, breadth, draught, underkeel clearance) from the management module.

### Output signals of this module are:

- integrated data on targets sent to the management module;
- fused and integrated data on own ship to the management module;
- archived data on the history of own and other ships manoeuvring to the management module.
Event identification module (EIM) is responsible for processing input signals through specialized computing algorithms that enable the identification of the following events:
- appearance of a new target,
- change in parameters of a target,
- change in the status of a target,
- change in the status of own ship,
- loss of signal from a target.

### Input signals of this module are:

- integrated data on targets (management module);
- fused and integrated data on own ship from the management module.

### Output signals of this module are:

- signals containing messages on identified events sent to the management module.
Knowledge base module (KBM) contains libraries of navigational procedures, algorithms for the interpretation of Collision Regulations and parameters of criteria for assessing a navigational situation.

### Input signals of this module are:

- user-verified parameters of navigational situation assessment criteria (such as CPAL, TCPAL, FCPAL, ship domain and ship fuzzy domain parameters of own ship, delay time of own ship manoeuvre, data defining the own ship - target encounter phases) from the management module.

### Output signals of this module are:

- parameters of navigational situation assessment criteria (such as CPAL, TCPAL, FCPAL, ship domain and ship fuzzy domain parameters of own ship, delay time of own ship manoeuvre, data defining the own ship - target encounter phases) to the management module.
Module of analysis and assessment of a navigational situation (MOAANS) is responsible for processing input signals, using dedicated computing algorithms, into output signals in the form of the values of navigational situation assessment criteria, as a description of a navigational situation and information whether to perform a manoeuvre or not.

### Input signals of this module are:

- integrated data on targets from the management module;
- fused and integrated data on own ship from the management module;
- parameters of navigational situation assessment criteria (such as CPAL, TCPAL, FCPAL, ship domain and ship fuzzy domain parameters of own ship, delay time of own ship manoeuvre, data defining the own ship - target encounter phases) from the management module;
- other data, including: navigational status of own ship, visibility (good, restricted) from the management module.

### Output signals of this module are:

- values of the criteria of navigational situation assessment (e.g. CPA, TCPA, BCR, TBCR, ship domain, ship fuzzy domain, FCPA) to the management module;
- parameters describing a navigational situation (bearings, relative bearings, distances to targets) to the management module;
- messages describing a navigational situation (e.g. 'crossing situation, 'vessels passed each other") to the management module;
- information whether to perform a manoeuvre or not sent to the management module.
Manoeuvre generation module (MGM) incorporates dedicated computing algorithms, including optimization algorithms, that are capable of converting input signals into output signals in the form of allowable and recommended manoeuvres of own ship and parameters of these manoeuvres.

### Input signals of this module are:

- information whether a manoeuvre has to be performed or not, from the management module;
- integrated target data (management module);
- fused and integrated own ship data from the management module;
- parameters of navigational situation assessment criteria (such as CPAL, TCPAL, FCPAL, ship domain and ship fuzzy domain parameters of own ship, delay time of own ship manoeuvre, data defining the own ship - target encounter phases) from the management module;
- values of the criteria of navigational situation assessment (e.g. CPA, TCPA, BCR, TBCR, domain, fuzzy domain, FCPA) from the management module;
- parameters describing a navigational situation (bearings, relative bearings, distances to targets) from the management module;
- messages describing a navigational situation (e.g. 'crossing situation, 'vessels passed each other') from the management module;
- own ship voyage plan data, i.e. coordinates of way points (management module);
- user's commands (e.g. indicate a target, optimize own ship's manoeuvre) from the management module;
- other data, including: navigational status of own ship, visibility (good, restricted) from the management module.

### Output signals of this module are:

- allowable and recommended manoeuvres of own ship and parameters describing these manoeuvres (safe courses, speeds, movement trajectories of own ship) to the management module;
- messages explaining recommended manoeuvres (e.g.'information on deviation, 'information on starting a manoeuvre) to the management module.
Movement prediction module (MPM), concerning vessels in the area, incorporates specialized computing algorithms that enable converting input signals into output signals in the form of future trajectory of own ship and a selected target or own ship and all targets.

### Input signals of this module are:

- integrated data on targets from the management module;
- fused and integrated data on own ship from the management module;
- archived data on the history of own ship and targets' manoeuvring from a management module;
- user's commands (e.g. indicate a target, present a predicted movement of own ship and/or target/s) from the management module.

### Output signals of this module are:

- points of future trajectory of own ship and target movements sent to the management module.
Graphical user interface module (GUI) presents in an alphanumeric and graphical form allowable and recommended manoeuvres, together with explanations describing the assessment of a navigational situation and manoeuvre parameters. The GUI module is also used for interaction with a navigator.

### Input signals of this module are:

- data on an area from the system of electronic navigational charts;
- integrated data on targets (management module);
- fused and integrated data on own ship from the management module;
- archived data on the history of own ship and targets' manoeuvring from the management module;
- allowable and recommended manoeuvres of own ship and parameters describing these manoeuvres (safe courses, speeds, movement trajectories of own ship) (management module);
- messages explaining recommended manoeuvres (e.g.'information deviation, 'information on starting a manoeuvre) from the management module;
- values of the criteria of navigational situation assessment (e.g. CPA, TCPA, BCR, TBCR, ship domain, ship fuzzy domain, FCPA) (management module);
- parameters describing a navigational situation (bearings, relative bearings, distances to targets) from the management module;
- messages describing a navigational situation (e.g. 'crossing situation, 'vessels passed each other') from the management module;
- information whether to perform a manoeuvre or not sent from the management module;
- parameters of navigational situation assessment criteria (such as CPAL, TCPAL, FCPAL, ship domain and ship fuzzy domain parameters of own ship, delay time of own ship manoeuvre, data defining the own ship - target encounter phases) from the management module;
- signals containing messages on event identification from the management module.

### Output signals of this module are:

- navigator-verified parameters of navigational situation assessment criteria (such as CPAL, TCPAL, FCPAL, ship domain and ship fuzzy domain parameters of own ship, delay time of own ship manoeuvre, data defining the own ship - target encounter phases) to the management module;
- own ship voyage plan data, i.e. coordinates of way points to the management module;
- static data on own ship (e.g.: name, identification number, navigational status, length, breadth, draught, underkeel clearance) to the management module;
- navigator-verified navigational status of targets to the management module;
- navigator's commands (e.g. predict the movement of own ship and target/s, optimize own ship manoeuvre, indicate a target) to the management module;
- executive decisions on the selected manoeuvre to the management module.
Management module, (MM) on the basis of received signals performs cyclic actions and acyclic actions activated after an initiating event recorded by the event identification module or GUI module (navigator's command). All input and output signals of this module are specified in the descriptions of the other foregoing modules. Additionally, output signals of the management module are executive decisions on the choice of a manoeuvre and its parameters, sent to the last of the listed modules: an execution module.
Execution module (EM) controlling the operation of own ship's machinery is connected with the autopilot, steering gear, main engine, engine telegraph and controllable pitch propeller.

This module converts into control signals executive decisions on the choice of a manoeuvre and its parameters, obtained from the management module, using specialized computing algorithms, codes these signals and sends them to ship's devices or machines, such as autopilot, steering gear, main engine's telegraph and controllable pitch propeller.

## Claims

1. A method of navigational decision support in the process of safe vessel navigation, consisting of navigational data collection, integration of these data and presentation of information on the navigational situation around own ship, wherein in the event of decision making at least two signals identifying own ship and other objects which can be vessels or stationary objects, hereinafter referred to as targets are received from various navigational systems and devices, then these signals undergo fusion in a fusion block (FB) and integration in an integration block (IB), both placed in a data collection module (DCM), followed by the processes of analysis and assessment of a navigational situation by means of a computer, in relation to all targets located at a distance shorter than the closest point of approach limit (CPA Limit), after which the given navigational situation is displayed to the navigator, and when a vessel faces risk of collision allowable and recommended manoeuvres of own ship or targets are generated and presented in a graphical format to the navigator, taking into account at least one safety criterion, such as CPA, as well as algorithmized criteria based on principles of good marine practice or economical criteria, retrieved from the knowledge base module (KBM) and taking into account navigational obstructions, shoreline, depths, and dynamics of own ship movement, while in the situation where the assumed CPA Limit makes it impossible to generate a solution in the form of recommended course and speed, the CPA Limit is reduced and a new solution is sought for its new value and such CPA Limit reductions are made several times until a solution is obtained or the preset minimum CPA Limit is reached, then upon previous approval of the navigator, a chosen allowable and recommended manoeuvre, or a series of subsequent manoeuvres is performed.

2. The method of claim 1, wherein, after navigational data are collected, signals from at least two identical, similar and/or different devices, such as a GPS, gyrocompass, log, AIS, or ARPA, are subjected to the process of fusion, and integration with an ENC system.

3. The method of claim 1, wherein algorithmized Collision Regulations are applied in the process of generating allowable and recommended manoeuvres.

4. The method of claim 1, wherein such safety criteria as the closest point of approach (CPA), fuzzy closest point of approach (FCPA), are taken into account in the process of generating allowable and recommended manoeuvres.

5. The method of claim 1, wherein in the process of generating allowable and recommended manoeuvres for the CPA criterion, if there are no solutions in the form of recommended courses and speeds such that would allow to pass targets at a preset CPA Limit, the value of CPA Limit is reduced and new solutions are sought, and if not found, the CPA Limit value can be reduced several times until a preset minimum value, preferably decreased by half, is reached.

6. The method of claim 1, wherein the navigator is shown explanations of the existing navigational situations, following the wording of regulations in force, e.g. by descriptions such as: 'crossing situation, 'vessels passed each other, 'head-on situation.

7. The method of claim 1, wherein the coastline, available depths and navigational obstructions are taken into account in the process of generating allowable and recommended manoeuvres.

8. The method of claim 1, wherein the own ship dynamics is taken into account in the process of generating allowable and recommended manoeuvres.

9. The method of claim 1, wherein the navigator is sent voice messages of generated navigational situations and recommended manoeuvres.

10. The method of claim 1, wherein generated allowable and recommended courses of own ship are graphically presented to the navigator, in the form of a convex figure, a circle with coloured sectors of allowable and prohibited courses and a recommended course displayed as a line segment or a vector.

11. The method of claim 1, wherein generated allowable and recommended speeds of own ship are graphically presented to the navigator, in the form of a rectangle with marked sectors of allowable and prohibited speeds and a recommended speed as a line segment.

12. The method of claim 1, wherein recommended trajectories of own ship movement determined by means of a computer fitted with specialized optimization algorithms are graphically presented to the navigator together with explanations of manoeuvre parameters, such as: value of the minimum passing distance, deviation, value of course alteration in a collision avoiding manoeuvre.

13. A navigational decision support system (NDSS), adapted to implement the method according to any of claims 1-12, connected with information source devices, such as AIS, ARPA, GNSS, log, gyrocompass, ENC, with a graphical user interface (GUI) and with ship-movement related devices such as autopilot, steering gear, main engine, telegraph and controllable-pitch propeller, wherein the NDSS comprises a management module (MM) - connected by an input and/or output signal with a manoeuvre generation module (MGM), event identification module (EIM), data collection module (DCM), module of analysis and assessment of a navigational situation (MOAANS), prediction module (PM), knowledge base module (KBM), module of graphical user interface (GUI), and execution module (EM).

14. The system of claim 13, wherein an integration block (IB) of a data collection module (DCM) is coupled through input and output signals with the a fusion block (FB) and through output signals with data archiving block (DAB) and a management module (MM).

15. The system of claim 13, wherein the execution module converts the received executive decisions on the choice and parameters of a manoeuvre, using specialized computing algorithms, into control signals, codes them, and sends to ship's devices/machines such as the autopilot, steering gear, main engine, engine telegraph, controllable pitch propeller.

## Patentansprüche

1. Das Verfahren zur Navigationsentscheidungsunterstützung im Prozess der sicheren Schiffsnavigation, das in der Navigationsdatenerfassung, der Integration dieser Daten und der Darstellung von Informationen über die Navigationssituation um das eigene Schiff herum besteht, zeichnet sich dadurch aus, dass bei der Entscheidungsfindung mindestens zwei Signale, die das eigene Schiff und andere Objekte identifizieren, die Schiffe oder stationäre Objekte, nachstehend Fremdobjekte genannt, sein können, von verschiedenen Navigationssystemen und -geräten empfangen werden, dann werden diese Signale in einem Fusionsblock (FB) verschmolzen und in einem Integrationsblock (IB) integriert, die sich in einem Datenerfassungsmodul (DEM) befinden, woraufhin die Navigationssituation in Bezug auf alle Fremdobjekte, zu denen der Abstand kürzer als der Schwellenwert für den Punkt der dichtesten Annäherung (CPA-Limit) ist, mittels eines Computers analysiert, beurteilt und präsentiert wird, und im Falle, wenn ein Schiff durch eine Kollision gefährdet ist, werden zulässige und empfohlene Manöver des eigenen Schiffs und der Fremdobjekte generiert und dem Navigator graphisch dargestellt, wobei mindestens ein Sicherheitskriterium wie CPA sowie algorithmierte Kriterien, die sich aus den Grundsätzen der guten maritimen Praxis oder aus den aus dem Wissensbasismodul (WBM) stammenden ökonomischen Kriterien ergeben, sowie Navigationshindernisse, die Küstenlinie, vorhandene Tiefen und die Dynamik der Bewegung des eigenen Schiffs berücksichtigt werden, wenn aber das angenommene CPA-Limit es unmöglich macht, eine Lösung in Form eines empfohlenen Kurses oder einer empfohlenen Geschwindigkeit zu bekommen, wird der Wert von CPA-Limit reduziert und eine neue Lösung für diesen Wert gesucht, so dass das CPA-Limit mehrmals reduziert wird, bis eine Lösung gefunden oder der voreingestellte Minimalwert von CPA-Limit erreicht wird, und nachher wird einer der zulässigen und empfohlenen Manöver oder eine Reihe von aufeinander folgenden Manövern durchgeführt, nachdem diese vorher durch den Navigator genehmigt worden sind.

2. Das Verfahren nach Anspruch 1 zeichnet sich dadurch aus, dass nach dem Sammeln von Navigationsdaten Signale von mindestens zwei identischen, ähnlichen und/oder verschiedenen Geräten wie GPS, Kreiselkompass, Log, AIS oder ARPA der Fusion und der Integration mit einem ENC-System unterzogen werden.

3. Das Verfahren nach Anspruch 1 zeichnet sich dadurch aus, dass die algorithmierten Kollisionsverhütungsregeln (KVR) bei der Generierung der zulässigen und empfohlenen Manöver angewendet werden.

4. Das Verfahren nach Anspruch 1 zeichnet sich dadurch aus, dass solche Sicherheitskriterien wie der Punkt der dichtesten Annäherung (CPA) oder der verschwommene Punkt der dichtesten Annäherung (FCPA) bei der Generierung der zulässigen und empfohlenen Manöver berücksichtigt werden.

5. Das Verfahren nach Anspruch 1 zeichnet sich dadurch aus, dass bei der Generierung der zulässigen und empfohlenen Manöver für das CPA-Kriterium im Falle, wenn keine Lösungen in Form von empfohlenen Kursen und Geschwindigkeiten gefunden wurden, die bei dem voreingestellten CPA-Limit ermöglicht würden, an Fremdobjekten vorbeizufahren, der Wert von CPA-Limit reduziert wird und neue Lösungen gesucht werden, und wenn diese nicht gefunden werden, kann der Wert von CPA-Limit mehrmals, am besten um die Hälfte, reduziert werden, bis der voreingestellte Minimalwert erreicht wird.

6. Das Verfahren nach Anspruch 1 zeichnet sich dadurch aus, dass dem Navigator die Erläuterungen zu den vorhandenen Navigationssituationen nach den geltenden Vorschriften z.B. durch folgende Beschreibungen präsentiert werden: "Kreuzende Kurse", "Schiffe sind aneinander vorbeigefahren", "Entgegengesetzte Kurse".

7. Das Verfahren nach Anspruch 1 zeichnet sich dadurch aus, dass die Küstenlinie, vorhandene Tiefen und Navigationshindernisse bei der Generierung der zulässigen und empfohlenen Manöver berücksichtigt werden.

8. Das Verfahren nach Anspruch 1 zeichnet sich dadurch aus, dass die Dynamik der Bewegung des eigenen Schiffs bei der Generierung der zulässigen und empfohlenen Manöver berücksichtigt wird.

9. Das Verfahren nach Anspruch 1 zeichnet sich dadurch aus, dass die Erläuterungen zu den generierten Navigationssituationen dem Navigator in Form von Sprachmeldungen präsentiert werden.

10. Das Verfahren nach Anspruch 1 zeichnet sich dadurch aus, dass die zulässigen und empfohlenen Kurse des eigenen Schiffs dem Navigator grafisch in Form einer konvexen Figur, eines Kreises mit farbig markieren Sektoren der zulässigen und verbotenen Kurse dargestellt werden und der empfohlene Kurs als Liniensegment oder Vektor präsentiert wird.

11. Das Verfahren nach Anspruch 1 zeichnet sich dadurch aus, dass die zulässigen und empfohlenen Geschwindigkeiten des eigenen Schiffs dem Navigator grafisch in Form eines Rechtecks mit markieren Sektoren der zulässigen und verbotenen Geschwindigkeiten dargestellt werden und die empfohlene Geschwindigkeit als Liniensegment präsentiert wird.

12. Das Verfahren nach Anspruch 1 zeichnet sich dadurch aus, dass die empfohlenen Bewegungstrajektorien des eigenen Schiffs, die mittels eines Computers aufgrund der spezialisierten Optimierungsalgorithmen bestimmt werden, dem Navigator zusammen mit den Erläuterungen zu Manöverparametern, wie z.B.: Wert des Mindestabstands beim Vorbeifahren, Abdrift, Wert der Kursänderung beim Manöver zur Vermeidung einer Kollision, grafisch dargestellt werden.

13. Das zur Implementierung des Verfahrens nach einem der Ansprüche 1-12 angepasste Navigationsentscheidungsunterstützungssystem (NEUS), das mit Informationsquellgeräten wie z.B.: AIS, ARPA, GNSS, Log, Kreiselkompass, ENC, mit der grafischen Benutzeroberfläche (GUI) und mit Geräten zur Schiffssteuerung wie z.B.: Autopilot, Lenkgetriebe, Hauptmotor, Telegraf und Verstellpropeller verbunden ist, zeichnet sich dadurch aus, dass das NEUS ein Management-Modul (MM) enthält, das durch ein Eingangs- und/oder Ausgangssignal mit einem Manövergenerierungsmodul (MGM), einem Ereignisidentifikationsmodul (EIM), einem Datenerfassungsmodul (DEM), einem Modul zur Analyse und Bewertung der Navigationssituation (MABNS), einem Modul zur Bewegungsvorhersage (MBV), einem Wissensbasismodul (WBM), einem Modul der grafischen Benutzeroberfläche (GUI) und einem Durchführungsmodul (DM) verbunden ist.

14. Das System nach Anspruch 13 zeichnet sich dadurch aus, dass der Integrationsblock (IB) des Datenerfassungsmoduls (DEM) über Eingangs- und Ausgangssignale mit dem Fusionsblock (FB) und über Ausgangssignale mit dem Datenarchivierungsblock (DAB) und dem Management-Modul (MM) gekoppelt ist.

15. Das System nach Anspruch 13 zeichnet sich dadurch aus, dass das Durchführungsmodul die empfangenen Durchführungsentscheidungen über die Wahl und die Parameter des Manövers unter Anwendung spezialisierter Rechenalgorithmen in Steuersignale umwandelt, diese codiert und an Schiffsgeräte bzw. -maschinen wie z.B.: Autopilot, Lenkgetriebe, Hauptmotor, Maschinentelegraf, Verstellpropeller sendet.

## Revendications

1. Le procédé de support de décision de navigation dans le processus de navigation maritime sûre, consistant à collecter et intégrer les données de navigation et à présenter l'information concernant la situation du navire porteur, où au moment de la décision, au moins deux signaux identifiant le navire porteur et d'autres objets, soit navires, soit objets fixes, ci-après dénommés objets étrangers, provenant des systèmes et appareils de navigation différents sont reçus ; ces signaux sont fusionnés en bloc (BF) et intégrés en bloc (BI) dans le module de collecte de données (MCD), ensuite, on effectue, à l'aide d'un ordinateur, une analyse et évaluation de la situation de navigation par rapport à tout objet situé plus proche que le point de rapprochement maximal (CPA Limit) et on présente la situation de navigation ; s'il existe un risque de collision, les manoeuvres acceptables et recommandées du navire porteur ou des objets étrangers sont générés et présentés au navigateur sous forme graphique, compte tenu d'au moins un critère de sécurité comme CPA et des critères algorithmisés résultant des règles de navigation ou des critères économiques provenant du module de base de connaissances (MBC), ainsi que des obstacles à la navigation, du rivage, de la profondeur et de la dynamique du mouvement du navire porteur ; tandis que dans la situation où la valeur de CPA Limit déterminée empêche d'obtenir la route et vitesse prescrites, on recherche la nouvelle solution en réduisant la valeur de CPA Limit plusieurs fois jusqu'à obtenir une solution ou atteindre la valeur minimale donnée de CPA Limit, ensuite, après approbation du navigateur, on met en oeuvre soit l'une des manoeuvres acceptables ou recommandées, soit une série de manoeuvres consécutives.

2. Le procédé selon la revendication 1 où après la collecte des données de navigation, les signaux provenant d'au moins deux appareils identiques, similaires ou différents, comme GPS, gyrocompas, loch, AIS, ARPA, sont fusionnés et intégrés dans le système CEN.

3. Le procédé selon la revendication 1 où lors de la génération des manoeuvres acceptables et recommandées, on applique le Règlement international pour prévenir les abordages en mer (RIPAM) algorithmisé.

4. Le procédé selon la revendication 1 où lors de la génération des manoeuvres acceptables et recommandées, on prend en compte des critères de sécurité comme le point de rapprochement maximal et le point flou de rapprochement maximal.

5. Le procédé selon la revendication 1 où lors de la génération des manoeuvres acceptables et recommandées pour le critère du point de rapprochement maximal, s'il n'a pas de routes et vitesses prescrites qui permettent de passer les objets étrangers à un CPA Limit déterminé, on recherche la nouvelle solution en réduisant la valeur de CPA Limit plusieurs fois, de préférence de moitié, jusqu'à obtenir une solution ou atteindre la valeur minimale déterminée.

6. Le procédé selon la revendication 1 où on présente au navigateur les explications des situations conformément aux dispositions en vigueur, p. ex. sous forme de telles descriptions : « intersection des routes », « objets se sont passés », « objets face à face ».

7. Le procédé selon la revendication 1 où lors de la génération des manoeuvres acceptables et recommandées on prend en compte le rivage, les profondeurs et les obstacles à la navigation.

8. Le procédé selon la revendication 1 où lors de la génération des manoeuvres acceptables et recommandées on prend en compte la dynamique du mouvement du navire porteur.

9. Le procédé selon la revendication 1 où on présente au navigateur les explications des situations et les manoeuvres recommandées sous forme de messages vocaux.

10. Le procédé selon la revendication 1 où on présente au navigateur les trajets acceptables et recommandés du navire porteur sous forme graphique de figure convexe, de cercle avec les secteurs marqués avec des couleurs qui représentent les routes acceptables et interdites et la route recommandée marquée avec une ligne.

11. Le procédé selon la revendication 1 où on présente au navigateur les vitesses acceptables et recommandées du navire porteur sous forme graphique de rectangle avec les secteurs marqués des routes acceptables et interdites et la route recommandée marquée avec une ligne.

12. Le procédé selon la revendication 1 où on présente au navigateur, sous forme graphique, les trajectoires recommandées du mouvement du navire porteur déterminées à l'aide d'un ordinateur en application d'algorithmes d'optimisation spéciaux, avec des explications des paramètres de la manoeuvre suivants : distance minimale de passage des objets étrangers, déviations de la route, valeurs de changement du trajet pendant le manoeuvre d'évitement.

13. Le système de support de décision de navigation (SSDN), adapté pour mettre en oeuvre la méthode selon l'une des revendications 1-12, connecté aux dispositifs avec des sources d'information comme AIS, ARPA, GNSS, gyrocompas, loch, CEN, des dispositifs d'interface graphique (GUI) et des équipements comme : pilote automatique, appareil à gouverner, moteur principal, télégraphe et hélice à pas ; le SSDN comprend un module de gestion (MG) connecté à l'aide du signal d'entrée et/ou de sortie au module de génération de manoeuvre (MGM), module d'identification d'événements (MIE), module de collecte de données (MCD), module d'analyse et évaluation de la situation de navigation (MAESN), module de prédiction de mouvement (MPM), module de base de connaissances (MBC), module d'interface graphique (GUI) et module d'exécution (ME).

14. Le système selon la revendication 13 où le bloc d'intégration (BI) du module de collecte de données (MCD) est couplé avec le bloc de fusion (BF) à l'aide les signaux d'entrée et de sortie et avec le bloc d'archivage (BA) et le module de gestion (MG) à l'aide les signaux de sortie.

15. Le système selon la revendication 13 où le module d'exécution transforme les décisions reçues concernant le choix et les paramètres de la manoeuvre en signaux de commande à l'aide des algorithmes de calcul spéciaux, les encode et transmet aux machines et dispositifs de navire suivants : pilote automatique, appareil à gouverner, moteurs, télégraphe et hélice à pas.
